# EUROPÄISCHE PATENTSCHRIFT

(11) **EP 2 789 284 B1**
(45) Veröffentlichungstag und Bekanntmachung des Hinweises auf die Patenterteilung: **12.06.2019**
(21) Anmeldenummer: 14163297.6
(22) Anmeldetag: 03.04.2014
(51) Int. Cl.: A47L 15/00, A47L 15/42, A47L 15/48

(54) **Spülautomat und Verfahren zum Betrieb eines Spülautomaten**
Dishwasher and method for the operation thereof
Lave-vaisselle et procede pour faire fonctionner un tel automate

(30) Priorität: 11.04.2013 DE 102013103646
(43) Veröffentlichungstag der Anmeldung: 15.10.2014
(73) Patentinhaber: Miele & Cie. KG, 33332 Gütersloh (DE)
(72) Erfinder: Bertram, Andre, 33739 Bielefeld (DE); Ennen, Günther, 32130 Enger (DE); Wolf, Cornelius, 33739 Bielefeld (DE); Kara, Seyfettin, 32139 Spenge (DE); Buhl, David, 33613 Bielefeld (DE); Dahms, Tobias, 30519 Hannover (DE); Malec, Tobias, 33729 Bielefeld (DE)

(56) Entgegenhaltungen:
- EP-A1- 2 301 409
- WO-A1-2005/053504

## Beschreibung

Die Erfindung betrifft einen Spülautomaten, insbesondere einen Spül- und Desinfektionsautomaten für gewerbliche Zwecke, nach dem Oberbegriff von Anspruch 1.

Spülautomaten im Allgemeinen sowie Spül- und Desinfektionsautomaten für gewerbliche Zwecke im Speziellen sind aus dem Stand der Technik an sich gut bekannt. Eines gesonderten druckschriftlichen Nachweises bedarf es an dieser Stelle deshalb nicht.

Gattungsgemäße Spülautomaten verfügen über einen Spülbehälter, der seinerseits einen Spülraum bereitstellt. Der Spülraum dient im bestimmungsgemäßen Verwendungsfall der Aufnahme von zu reinigendem Spülgut.

Zur Beschickung des zu reinigenden Spülgutes mit Spülflotte verfügen vorbekannte Spülautomaten typischerweise über eine spülraumseitig ausgebildete Sprüheinrichtung. Diese weist verdrehbar ausgebildete Sprüharme auf, mittels welcher im bestimmungsgemäßen Betrieb von einer Umwälzpumpe geförderte Spülflotte auf das zu reinigende Spülgut gesprüht wird. Es kann zwischen automatenseitigen Sprüharmen einerseits und korbseitigen Sprüharmen andererseits unterschieden werden.

"Automatenseitige Sprüharme" betreffen solche Sprüharme, die im Spülraum des Automaten installiert sind. Es sind typischerweise zwei solcher Sprüharme vorgesehen, wobei der eine deckenseitig und der anderer bodenseitig des Spülraums ausgebildet ist. "Korbseitige Sprüharme" betreffen indes solche Sprüharme, die an einem im Spülraum befindlichen Sprühkorb angeordnet sind, die also zusammen mit dem Sprühkorb verwenderseitig aus dem Spülraum herausverfahren werden können. Zur strömungstechnischen Anbindung dieser Sprüharme an eine Mediumsversorgung ist eine Anschlusseinrichtung vorgesehen, die außerhalb des Spülbehälters angeordnet ist und Ankoppelstellen bereitstellt, die im bestimmungsgemäßen Verwendungsfall eine strömungstechnische Verbindung der Anschlusseinrichtung mit den jeweils zugehörigen Sprüharmen des Spülkorbs ausbilden.

Die Sprüharme können wahlweise mit Spülflotte einerseits und mit Trocknungsluft andererseits beschickt werden. Die Anschlusseinrichtung verfügt zu diesem Zweck über entsprechende Verteiler, wobei jedem Verteiler ein Rückschlagventil zugeordnet ist, so dass ein Einströmen von Spülflotte in den Trocknungsluftkreislauf einerseits und ein Eindringen von Luft in den Spülflottenkreislauf andererseits unterbunden ist.

Zur Beaufschlagung von gereinigtem Spülgut mit Trocknungsluft dient eine Trocknungseinrichtung. Diese verfügt über ein Gebläse, das im Trocknungsfall Luft in den Spülbehälter einfördert.

Im einfachsten Fall dient die über das Gebläse in den Spülraum eingeförderte Trocknungsluft dazu, die im Spülraum befindliche, warmfeuchte Luft aus dem Spülraum auszutreiben. Die im Spülraum befindliche warmfeuchte Luft wird also durch die von außen zugeführte Trocknungsluft ausgetauscht.

Von Nachteil dieser Verfahrensdurchführung ist der hohe Energieverlust. Zum einen wird die im Spülraum befindliche Heißluft ungenutzt an die Umgebung abgegeben und die zugeführte Trocknungsluft muss vor einem Einführen in den Spülraum aufgeheizt werden. Zum anderen geht dem gesamten Spülsystem durch die Abförderung der feuchten Innenraumluft Wasser verloren, das im weiteren Verfahrensgang zu ersetzen ist. Bei Spül- und Desinfektionsautomaten für gewerbliche Zwecke können dies drei Liter und mehr an Wasser sein, die durch Austrag der feuchten Spülraumluft in Form von Dampf ungenutzt an die Umgebung abgegeben werden.

Um die voraufgeführten Nachteile zu vermeiden und Ressourcen zu schonen, ist aus dem Stand der Technik die sogenannte Sorptionstrocknung bekannt geworden. Danach wird dem Spülraum die sich dort nach dem letzten Spülgang befindliche feuchtwarme Luft entnommen und einer Sorptionseinheit zugeführt. In der Sorptionseinheit findet eine Trocknung der Luft, d.h. einen Entfeuchtung derselben statt und die getrocknete Luft gelangt alsdann aus der Sorptionseinheit zurück in den Spülraum. Mittels eines Gebläses erfolgt eine Umwälzung der Luft und der so erzeugte Luftaustausch zwischen dem Spülraum und der Sorptionseinheit wird so lange aufrechterhalten, bis eine wunschgemäße Trocknung der Luft und damit auch des im Spülraum befindlichen Spülgutes erreicht ist.

Die Sorptionseinheit verfügt über einen Sorptionsbehälter, der ein reversibel dehydrierbares Sorptionsmittel bereitstellt, bei dem es sich beispielsweise um Zeolith handeln kann. Die dem Spülraum entnommene feuchte Luft wird durch den Sorptionsbehälter geführt, infolge dessen es zu einem Kontakt zwischen der feuchten Luft und dem vom Sorptionsbehälter bereitgestellten Sorptionsmittel kommt. Dabei wird der feuchten Luft durch das reversibel dehydrierbare Sorptionsmittel Feuchtigkeit durch Adsorption entzogen, infolge dessen es zur Lufttrocknung kommt.

Zum Zwecke der Regenerierung, d.h. Desorption des Sorptionsmittels wird dieses erhitzt. Dies geschieht beispielsweise mittels einer elektrischen Heizung. Infolge dessen tritt das vom Sorptionsmittel zuvor aufgenommene Wasser als Wasserdampf aus und kann der Trocknungseinrichtung entnommen werden. Typischerweise wird der bei einem Regenerierungsvorgang freiwerdende heiße Wasserdampf zum Zwecke der Wärmerückgewinnung dem Spülbehälter zugeführt, wo dann beispielsweise zu Beginn eines neuen Spülgangs eine Erwärmung der Spülflotte und/oder des im Spülbehälter befindlichen Spülguts erfolgen kann, wie etwa in der EP 2301 409 A1 beschrieben.

Obgleich sich die aus dem Stand der Technik vorbekannten Sorptionstrocknung im alltäglichen Praxiseinsatz bewährt hat, besteht Verbesserungsbedarf, insbesondere hinsichtlich der Energieeffizienz. Es ist deshalb die Aufgabe der Erfindung, einen Spülautomaten der eingangs genannten Art vorzuschlagen, der dahingehend weiterentwickelt ist, dass eine gegenüber dem Stand der Technik noch weiter verbesserte Energieeffizienz erreicht ist.

Zur Lösung dieser Aufgabe wird mit der Erfindung vorgeschlagen ein Spülautomat mit den Merkmalen von Anspruch 1.

Die aus dem Stand der Technik vorbekannten Sorptionstrockner weisen insbesondere den Nachteil auf, dass nach Abschluss einer Regeneration des Sorptionsmittels die im Sorptionsmittel noch enthaltene Restwärme ungenutzt bleibt. Dabei wirkt sich dieser Nachteil umso gravierender aus, je größer die Sorptionseinheit ist, bzw. je größer die Menge an zum Einsatz kommendem Sorptionsmittel ist.

Die erfindungsgemäße Ausgestaltung schafft hier Abhilfe. Danach ist eine Wärmerückgewinnungseinrichtung vorgesehen. Diese dient dazu, die nach Abschluss eines bestimmungsgemäßen Regenerationsprozesses im Sorptionsmittel noch befindliche Restwärme nutzbar zu machen. Eine verbesserte Energieeffizienz ist in vorteilhafter Weise die Folge.

Die Wärmerückgewinnungseinrichtung nach der Erfindung verfügt über einen Wärmespeicher einerseits und einen Wärmeübertrager andererseits. Der Wärmespeicher ist mit Wasser befüllt. Dieses dient als Wärmeträger. Dabei ist die Verwendung von Wasser als Wärmeträger deshalb bevorzugt, weil es im bestimmungsgemäßen Verwendungsfall des Spülautomaten als Spülflotte verwendet werden kann, womit eine Wärmerückführung stattfindet.

Der Wärmeübertrager steht einerseits mit dem Sorptionsmittel der Sorptionseinheit und andererseits mit dem Wasser des Wärmespeichers in thermischem Kontakt. Nach Abschluss einer bestimmungsgemäßen Regeneration des Sorptionsmittels kann die darin befindliche Restwärme mittels des Wärmeübertragers von dem Sorptionsmittel als Wärmequelle auf das im Wärmespeicher befindliche Wasser als Wärmesenke übertragen werden. Es kommt infolge dessen zu einem Wärmeübergang vom Sorptionsmittel auf das Wasser, infolge dessen es zu einer Erwärmung des Wassers kommt. Dieses durch den Wärmeabtransport aufgeheizte Wasser kann in einem späteren Spülprogramm des Spülautomaten als Warmwasser genutzt werden. Es findet auf diese Weise eine Wärmerückgewinnung statt, womit sich eine gegenüber dem Stand der Technik verbesserte Energieeffizienz einstellt.

Im bestimmungsgemäßen Verwendungsfall wird das Sorptionsmittel zum Zwecke der Regenerierung erhitzt. Dies geschieht mit einer vorzugsweise elektrischen Heizung. Das zuvor vom Sorptionsmittel aufgenommene Wasser tritt infolge der Aufheizung als heißer Wasserdampf aus. Dieser wird der Sorptionseinheit entnommen und zum Zwecke der Wärmerückgewinnung dem Spülbehälter zugeführt. Sobald der Regenerierungsprozess abgeschlossen ist, d.h. das vom Sorptionsmittel zuvor aufgenommene Wasser verdampft und abtransportiert ist, ist das Sorptionsmittel infolge der Aufheizung nach wie vor erhitzt. Diese im Sorptionsmittel nach Abschluss einer Regenerierung befindliche Restwärme geht bei aus dem Stand der Technik bekannten Konstruktionen verloren, wobei das Sorptionsmittel nach Abschluss einer bestimmungsgemäßen Regeneration durchaus noch eine Temperatur von 150°C und mehr aufweisen kann. Diese im Sorptionsmittel befindliche Restwärme wird mittels der erfindungsgemäßen Wärmerückgewinnungseinrichtung in der schon vorbeschriebenen Weise nutzbar gemacht, indem die Restwärme dazu genutzt wird, Frischwasser und/oder Spülflotte zu erwärmen, welches bzw. welche in einem späteren Spülprogramm benutzt werden kann.

Je größer der vom Spülautomaten bereitgestellte Spülraum ist, desto größer fällt die Menge an zu trocknender feuchtwarmer Luft aus und desto größer ist die Sorptionseinheit auszulegen, um eine ordnungsgemäße Lufttrocknung und damit eine ordnungsgemäße Trocknung des Spülguts gewährleisten zu können. Mit der Größe der Sorptionseinheit, d.h. der Menge an Sorptionsmittel steigt auch die für eine Regeneration des Sorptionsmittels benötigte Wärmemenge. Die mit der erfindungsgemäßen Ausgestaltung erreichten Vorteile kommen deshalb insbesondere bei solchen Spülautomaten zum Tragen, die über eine vergleichsweise große Sorptionseinheit verfügen. Dank der erfindungsgemäßen Ausgestaltung wird es deshalb unter dem Gesichtspunkt der Energieeffizienz erstmals möglich, auch Spülautomaten für gewerbliche Zwecke mit einer Sorptionstrocknung auszurüsten. Denn erst die mit der Erfindung vorgeschlagene Wärmerückgewinnung macht den Einsatz auch vergleichsweise großer Sorptionseinheiten energetisch sinnvoll.

Erfindungsgemäß ist vorgesehen, dass der Wärmeübertrager sorptionseinheitenseitig in das Sorptionsmittel eingebettet ist. Auf diese Weise wird ein unmittelbarer Kontakt zwischen dem Sorptionsmittel einerseits und dem Wärmeübertrager andererseits geschaffen, so dass ein weitestgehend verlustfreier Wärmeübergang vom Sorptionsmittel auf den Wärmeübertrager stattfinden kann.

Gemäß einem weiteren Merkmal der Erfindung ist vorgesehen, dass der Wärmeübertrager derart ausgebildet ist, dass im Falle eines Wärmegefälles zwischen der Sorptionseinheit als Wärmequelle einerseits und dem Wärmespeicher als Wärmesenke andererseits Wärme von der Sorptionseinheit an den Wärmespeicher übertragbar ist. Nach Beendigung einer bestimmungsgemäßen Regeneration des von der Sorptionseinheit bevorrateten Sorptionsmittels ist dieses infolge der während der Regeneration erfolgten Aufheizung noch thermisch aufgeladen, beinhaltet mithin Wärme. Insofern stellt die Sorptionseinheit nach Abschluss einer bestimmungsgemäßen Regeneration eine Wärmequelle dar. Das im Wärmespeicher gespeicherte Wasser ist gegenüber dem noch warmen Sorptionsmittel vergleichsweise kühl und stellt mithin im Vergleich zum Sorptionsmittel eine Wärmesenke dar. Der erfindungsgemäß vorgesehene Wärmeübertrager verbindet die Sorptionseinheit und den Wärmespeicher thermisch miteinander, so dass im Falle eines Wärmegefälles nach Abschluss einer bestimmungsgemäßen Regeneration Wärme mittels des Wärmeübertragers von der Sorptionseinheit an den Wärmespeicher übertragen werden kann. Dabei erfolgt dieser Wärmeübertrag aufgrund des Wärmegefälles automatisch, bis es zu einem entsprechenden Wärmeausgleich gekommen ist, infolge dessen es zu einer Erwärmung des im Wärmespeicher befindlichen Wassers kommt.

Zum Zwecke der Wärmeübertragung stellt der Wärmeübertrager ein Medium für den Wärmetransport bereit. Bei einem solchen Medium kann es sich um ein Fluid beispielsweise in Form eines Kältemittels handeln, das auf der warmen Seite des Wärmeübertragers verdampft und an der kalten Seite des Wärmeübertragers kondensiert, oder aber auch Luft oder ein vergleichbares Medium, das besonders geeignet für eine Schallübertragung ist.

Es findet nach der Erfindung bevorzugter Weise ein Wärmetransport mittels Schall statt. Zu diesem Zweck erfolgt eine Umwandlung der in den Wärmeübertrager eingeleiteten thermischen Energie in Schallenergie. Innerhalb des Wärmeübertragers findet sodann ein Energietransport mittels Schallwellen statt, insbesondere mit Luft als Medium für den Wärmetransport in Form von Schallwellen. Auf der kalten Seite des Wärmeübertragers findet eine Rückumwandlung der Schallenergie in thermische Energie statt. Diese Art des Energietransports hat den besonderen Vorteil, dass er nahezu verlustfrei erfolgt. In vorteilhafter Weise kann so ein nahezu vollständiger und verlustfreier Wärmeübertrag von der Sorptionseinheit auf den Wärmespeicher stattfinden. Um den Energieverlust beim Transport möglichst zu minimieren ist der Wärmeübertrager bevorzugter Weise isoliert ausgebildet, was im Falle einer Energieübertragung mittels Schall eine Schallisolierung erforderlich macht. Zur Wärmeübertragung mittels Schall kommen bevorzugter Weise sogenannte Supertubes zum Einsatz.

Gemäß einem weiteren Merkmal der Erfindung weist der Wärmeübertrager Heatpipes und/oder Supertubes auf. Supertubes ermöglichen eine Wärmeübertragung mittels Schall, wohingegen Heatpipes eine Wärmeübertragung mittels Verdampfungswärme ermöglichen. Als Verdampfungsmedium kommt beispielsweise Alkohol in Betracht.

Der Einsatz von Supertubes ist bevorzugt, da diese wahlweise rohrförmig als auch andersartig, beispielsweise plattenförmig ausgebildet sein können. Dabei ist insbesondere die plattenförmige Ausgestaltung bevorzugt, da hierdurch eine vergleichsweise große Wärmeübertragungsfläche bereitgestellt wird, so dass ein optimierter Wärmeübergang vom Sorptionsmittel auf die Supertubes einerseits als auch von den Supertubes auf das im Wasserspeicher befindliche Wasser andererseits erreicht ist.

Der Einsatz von Supertubes ist insbesondere auch deshalb bevorzugt, weil diese eine nahezu verlustfreie Wärmeübertragung vom Sorptionsmittel auf das im Wärmespeicher befindliche Wasser erlauben. Dabei erfolgt die Wärmeübertragung durch die Supertubes mittels Schall.

Die Wärmeübertragung mittels Schall, insbesondere durch Supertubes, hat ferner den Vorteil, dass der Zeitpunkt für die Abkühlung des Sorptionsmittels, d.h. der Wärmeübergang vom Sorptionsmittel auf das im Wärmespeicher befindliche Wasser frei gewählt werden kann. Es besteht insofern Unabhängigkeit vom Spülprogramm des Spülautomaten.

Gemäß einem weiteren Merkmal der Erfindung ist vorgesehen, dass der Wärmeübertrager sorptionseinheitenseitig Lamellen trägt. Eine solche Ausgestaltung ist insbesondere dann bevorzugt, wenn der Wärmeübertrager rohrförmig ausgebildet ist. Die Lamellen sorgen in diesem Fall für einen verbesserten Wärmeübertrag insbesondere vom Sorptionsmittel auf den Wärmeübertrager. Die Ausgestaltung solcher Lamellen ist deshalb bevorzugt, weil das Sorptionsmittel wärmeisolierend wirkt, was einem optimierten Wärmeübergang auf den Wärmeübertrager entgegensteht. Die von dem Wärmeübertrager getragenen Lamellen schaffen hier Abhilfe und verbessern den Wärmeübergang.

Verfahrensseitig wird mit der Erfindung des Weiteren vorgeschlagen ein Verfahren zum Betrieb eines Spülautomaten mit einer Sorptionsmittel aufweisenden Sorptionseinheit, insbesondere eines Spül- und Desinfektionsautomaten für gewerbliche Zwecke, bei dem nach Abschluss einer Regeneration des Sorptionsmittels die im Sorptionsmittel noch vorhandene Restwärme zumindest teilweise zur Erwärmung von in einem Wärmespeicher befindlichem Wasser verwendet wird. Es findet dank dieser Verfahrensdurchführung in der schon vorbeschriebenen Weise eine Wärmerückgewinnung statt, was in vorteilhafter Weise die Energieeffizienz des erfindungsgemäßen Spülautomaten im bestimmungsgemäßen Betrieb verbessert. Dabei wird das infolge der Wärmerückgewinnung erwärmte Wasser dem Spülraum in einem späteren Spülprogramm zugeführt. Als zu erwärmendes Wasser kann wahlweise Frischwasser oder auch dem Spülbehälter zuvor entnommene Spülflotte bzw. ein Gemisch aus Frischwasser und Spülflotte dienen.

Verfahrensseitig ist vorgesehen, dass die Restwärme mittels eines Wärmeübertragers von dem Sorptionsmittel an das Wasser übertragen wird. Dabei dient das Sorptionsmittel als Wärmequelle für das Wasser, welches eine Wärmesenke darstellt. Im Falle eines Wärmegefälles vom Sorptionsmittel zum Wasser, welches sich nach Abschluss einer bestimmungsgemäßen Regeneration des Sorptionsmittels einstellt, wird mittels des Wärmeübertragers der im Sorptionsmittel im Vergleich zum Wasser gespeicherte Wärmeüberschuss vom Sorptionsmittel an das Wasser übertragen. Dabei erfolgt der Wärmeübertrag mittels des Wärmeübertragers bevorzugter Weise mittels Schall. Dabei wird die Wärmeenergie wärmequellenseitig des Wärmeübertragers in Schallwellen als Energieträger umgewandelt. Mittels des Wärmeübertragers erfolgt dann ein Transport der Energie durch Ausbreitung der wärmeseitig erzeugten Schallwellen innerhalb des Wärmeübertragers. Wärmesenkenseitig erfolgt eine erneute Energieumwandlung, wobei hier eine Rückumwandlung der mittels des Wärmeübertragers transportierten Schallwellen in Wärmeenergie stattfindet, die dann zur Aufheizung des vom Wärmespeicher bevorrateten Wassers genutzt wird. Die Wärmeübertragung mittels Schall hat dabei den Vorteil, dass sie nahezu verlustfrei ist.

Weitere Merkmale und Vorteile der Erfindung ergeben sich aus der nachfolgenden Beschreibung anhand der Figuren. Dabei zeigen
- Fig. 1: in schematischer Darstellung einen Spülautomaten nach der Erfindung gemäß einer ersten Ausführungsform;
- Fig. 2: in schematischer Darstellung einen Spülautomaten nach der Erfindung gemäß einer zweiten Ausführungsform;
- Fig. 3: in schematischer Ansicht eine Wärmeübertragungseinrichtung nach der Erfindung;
- Fig. 4: in schematisch perspektivischer Ansicht die Wärmeübertragungseinrichtung nach der Erfindung gemäß Fig. 3 und
- Fig. 5: in schematisch perspektivischer Ansicht eine Wärmeübertragungseinrichtung nach der Erfindung gemäß einer zweiten Ausführungsform.

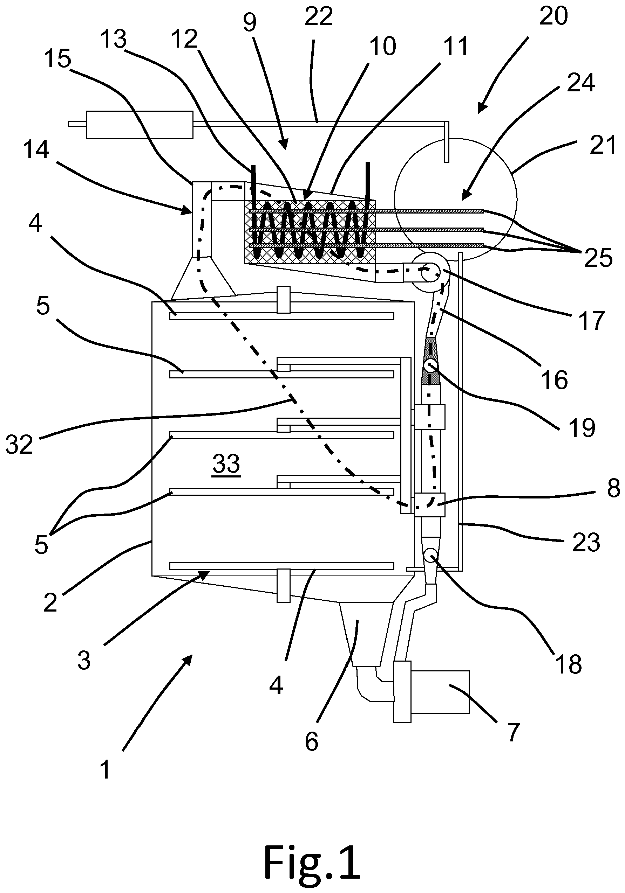

Fig. 1 zeigt in rein schematischer Ansicht einen Spülautomaten 1 nach der Erfindung, und zwar in der Ausgestaltung als Spül- und Desinfektionsautomat für gewerbliche Zwecke.

Der Spülautomat 1 weist einen Spülbehälter 2 auf. Dieser stellt seinerseits einen Spülraum 33 bereit, der im bestimmungsgemäßen Verwendungsfall der Aufnahme von zu reinigendem Spülgut dient. Innerhalb des Spülbehälters 2 ist eine Sprüheinrichtung 3 zur Beschickung von zu reinigendem Spülgut mit Spülflotte angeordnet. Die Sprüheinrichtung 3 verfügt über Sprüharme 4 und 5, wobei es sich bei den Sprüharmen 4 um automatenseitige Sprüharme und bei den Sprüharmen 5 um korbseitige Sprüharme handelt. Der die Sprüharme 5 tragende Korb zur Aufnahme von zu reinigendem Spülgut ist der besseren Übersicht wegen in Fig. 1 nicht gesondert dargestellt.

In an sich bekannter Weise schließt sich an den Spülbehälter 2 ein Sammeltopf 6 an, in dem sich im bestimmungsgemäßen Verwendungsfall Spülflotte ansammelt. Diese wird mittels einer Umwälzpumpe 7 umgewälzt und mittels mindestens einer Zuleitung 8 u.a. auf die Sprüharme 5 zur Beschickung von zu reinigendem Spülgut mit Spülflotte verteilt. Vorliegend sind ohne Beschränkung der Allgemeinheit zwei Zuleitungen 8 dargestellt.

Der Spülautomat 1 verfügt des Weiteren über eine Trocknungseinrichtung 9. Dabei ist die Trocknungseinrichtung 9 als Sorptionstrocknung ausgebildet und stellt eine Sorptionseinheit 10 bereit. Diese verfügt über einen mit Sorptionsmittel 12 befüllten Behälter 11. Ferner verfügt die Sorptionseinheit 10 über eine elektrische Heizung 13, die in das vom Behälter 11 aufgenommene Sorptionsmittel 12 eingebettet ist. Als Sorptionsmittel wird beispielsweise Zeolith verwendet.

Die Sorptionseinheit 10 ist mittels eines Luftführungskanals 14 an den Spülraum 33 strömungstechnisch angeschlossen. Es sind dabei ein Zuluftkanal 15 und ein Abluftkanal 16 vorgesehen. Im Trocknungsfall verlässt im Spülraum 33 befindliche warmfeuchte Luft den Spülraum 33 in Entsprechung des Luftströmungswegs 32 und gelangt über den Zuluftkanal 15 zur Sorptionseinheit 10. Das von der Sorptionseinheit 10 bevorratete Sorptionsmittel 12 wird von der dem Spülraum 33 entstammenden Luft durchströmt und gelangt sodann über den Abluftkanal 16 und die Zuleitung 8 zurück in den Spülraum 33. Zum Zwecke der Luftzirkulation dient ein in den Abluftkanal 16 integriertes Gebläse 17. Um Partikel aus der Luftströmung herauszufiltern ist hinter der Sorptionseinheit 10 (in Richtung der Luftströmung im Trocknungsfall), insbesondere im Abluftkanal 16, etwa zwischen Sorptionseinheit 10 und Gebläse 17, ein in den Figs nicht gezeigter Filter, insbesondere ein HEPA-Filter, angeordnet.

Die Zuleitung 8 dient der Beschickung der Sprüharme 5 wahlweise mit Spülflotte oder mit Trocknungsluft. Um zu verhindern, dass Spülflotte in den Trocknungskreislauf bzw. Trocknungsluft in den Spülflottenkreislauf gelangt, sind entsprechende Ventile 18 und 19 vorgesehen. Bei einer Beschickung der Zuleitung 8 mit Spülflotte ist das Ventil 18 geöffnet und das Ventil 19 geschlossen. Bei einer Beschickung der Zuleitung 8 mit Trocknungsluft ist indes das Ventil 19 geöffnet und das Ventil 18 geschlossen.

Die Funktionsweise der Sorptionstrocknung ist die folgende.

Nach Abschluss eines bestimmungsgemäßen Spülprogramms ist das im Spülraum 33 befindliche Spülgut zu trocknen. Zu diesem Zweck wird das Ventil 18 geschlossen und das Ventil 19 geöffnet. Das Gebläse 17 der Trocknungseinrichtung 9 wird eingeschaltet. Infolge dessen stellt sich die Luftströmung 32 ein, wobei die Strömung in der Darstellung von Fig. 1 in Uhrzeigerrichtung verläuft.

Infolge der Luftströmung 32 wird im Spülraum 33 befindliche warmfeuchte Luft ausgetrieben und der Sorptionseinheit 10 zugeführt. Es kommt infolge dessen zu einem Kontakt zwischen der warmfeuchten Luft und dem vom Sorptionsbehälter 11 bereitgestellten Sorptionsmittel 12. Dabei wird der warmfeuchten Luft durch das reversibel dehydrierbare Sorptionsmittel 12 Feuchtigkeit durch Adsorption entzogen, infolge dessen es zur Lufttrocknung kommt. Die insoweit getrocknete Luft wird über den Abluftkanal 16 und die Zuleitung 8 zurück in den Spülraum 33 gefördert. Dabei erfolgt mittels des Gebläses 17 eine Umwälzung der Luft und der so erzeugte Luftaustausch zwischen dem Spülbehälter 2 einerseits und der Sorptionseinheit 10 andererseits wird so lange aufrechterhalten, bis eine wunschgemäße Trocknung der Luft und damit auch des im Spülraum befindlichen Spülgutes erreicht ist.

Zum Zwecke der Regenerierung, d.h. Desorption des Sorptionsmittels 12 wird dieses erhitzt, zu welchem Zwecke die elektrische Heizung 13 in Betrieb ist. Infolge dieser Aufheizung tritt aus dem Sorptionsmittel 12 das zuvor aufgenommene Wasser als heißer Wasserdampf aus, es kommt also zu einem Austreiben der vom Sorptionsmittel 12 gehaltenen Feuchtigkeit durch Verdunstung. Während der Aufheizung ist das Gebläse 17 in Betrieb, so dass Luft entlang des Kreislaufs der Luftströmung 32, aber in entgegengesetzter Strömungsrichtung zu jener im Trocknungsfall, also in der Darstellung von Fig. 1 entgegengesetzt zur Uhrzeigerrichtung, umgewälzt wird. Dies kann etwa durch ein in der Laufrichtung umschaltbares Gebläse 17 bewirkt werden. Das Gebläse 17 bewirkt eine Strömung von Luft aus dem Spülbehälter 2 durch die Zuleitung 8 über den Abluftkanal 16 in die Sorptionseinheit 10. Beim Durchströmen der Sorptionseinheit 10 nimmt die Luft dabei die in Form von Dampf freiwerdende Flüssigkeit auf, reist sie mit und transportiert sie über den Zuluftkanal 15 zurück in den Spülbehälter 2, wo dann eine Aufheizung von Spülflotte und/oder Spülgut erfolgen kann. Dabei erfolgt die Regenerierung des Sorptionsmittels 12 typischerweise zu Beginn eines neuen Spülprogramms. Zum Abschluss des Spülprogramms, wenn also eine Trocknung des gereinigten Spülgutes zu erfolgen hat, steht die dann regenerierte Sorptionseinheit 10 zum Zwecke der Sorptionstrocknung zur Verfügung.

Der erfindungsgemäße Spülautomat 1 verfügt über eine Wärmeübertragungseinrichtung 20. Diese stellt einen außerhalb des Spülraums 33 angeordneten Wärmespeicher 21 bereit, der mit Wasser befüllt ist. Der Wärmespeicher 21 ist über eine Wasserzulaufleitung 22 an eine Frischwasserzuführung angeschlossen. Mittels einer Wasserablaufleitung 23 steht der Wärmespeicher 21 mit dem Spülraum 33 in strömungstechnischer Verbindung.

Die Wärmeübertragungseinrichtung 20 verfügt des Weiteren über einen Wärmeübertrager 24. Im gezeigten Ausführungsbeispiel verfügt der Wärmeübertrager 24 über Supertubes 25. Diese stehen einerseits mit dem Sorptionsmittel 12 und andererseits mit dem vom Wasserspeicher 21 bevorrateten Wasser in jeweils thermischem Kontakt.

Nach Abschluss einer bestimmungsgemäßen Regeneration des Sorptionsmittels 12 enthält dieses aufgrund der während der Regenerationsphase erfolgten Aufheizung Restwärme. Je nach zuvor erfolgter Aufheizung kann das Sorptionsmittel 12 nach Abschluss einer Regeneration noch eine Temperatur von mehr als 150°C, insbesondere bis zu 250°C, aufweisen. Diese im Sorptionsmittel 12 befindliche Restwärme wird mittels der Wärmeübertragungseinrichtung 20 rückgewonnen und nutzbar gemacht.

Die im Sorptionsmittel 12 gespeicherte Restwärme wird mittels der Supertubes 25 nahezu verlustfrei auf das im Wärmespeicher 21 befindliche Wasser übertragen. Es kommt infolge dessen zu einer Aufheizung des im Wärmespeicher gespeicherten Wassers. Im weiteren Spülprogrammablauf kann dieses aufgewärmte Wasser genutzt und als Spülflotte dem Spülbehälter 33 über die Wasserablaufleitung 23 zugeführt werden.

Der Wärmespeicher 21 kann mit einer elektrischen Heizung ausgerüstet sein. Diese wird bedarfsweise eingeschaltet, sofern die über die Wärmerückgewinnungseinrichtung 20 aus dem Sorptionsmittel 12 zurückgewonnene Wärme alleine nicht ausreicht, um die im Wasserspeicher bevorratete Wassermenge auf die wünschenswerter Weise zu erzielende Endtemperatur aufzuheizen.

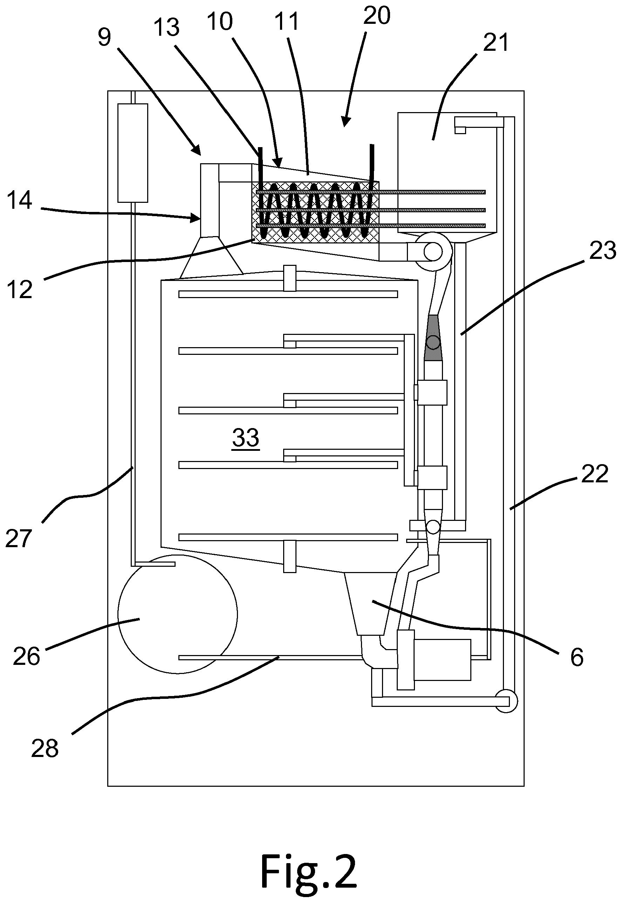

Eine alternative Ausgestaltungsform zeigt Fig. 2. Im Unterschied zur vorerläuterten Ausführungsform weist der Spülautomat 1 nach Fig. 2 einen an eine Frischwasserleitung über einen Boilerzulauf 27 angeschlossenen Boiler 26 auf. Ablaufseitig ist der Boiler 26 über einen Boilerablauf 28 an den Spülraum 33 angeschlossen. Über den Boiler 26 erfolgt im bestimmungsgemäßen Verwendungsfall eine Beschickung des Spülraums 33 mit aufgewärmtem Frischwasser.

Die Wärmeübertragungseinrichtung 20 verfügt in schon vorbeschriebener Weise über einen Wärmespeicher 21. Dieser ist allerdings im Unterschied zur vorbeschriebenen Konstruktion nicht an eine Frischwasserzuführung, sondern an den Spülraum 33 angeschlossen, zu welchem Zweck die Wasserzulaufleitung 22 an den Sammeltopf 6 des Spülautomaten angeflanscht ist. Im bestimmungsgemäßen Verwendungsfall findet demnach eine Beschickung des Wärmespeichers 21 mit dem Spülraum 33 entnommener Spülflotte statt. Diese wird nach einer Erwärmung im Wärmespeicher 21 über die Wasserablaufleitung 23 zurück in den Spülraum 33 geleitet.

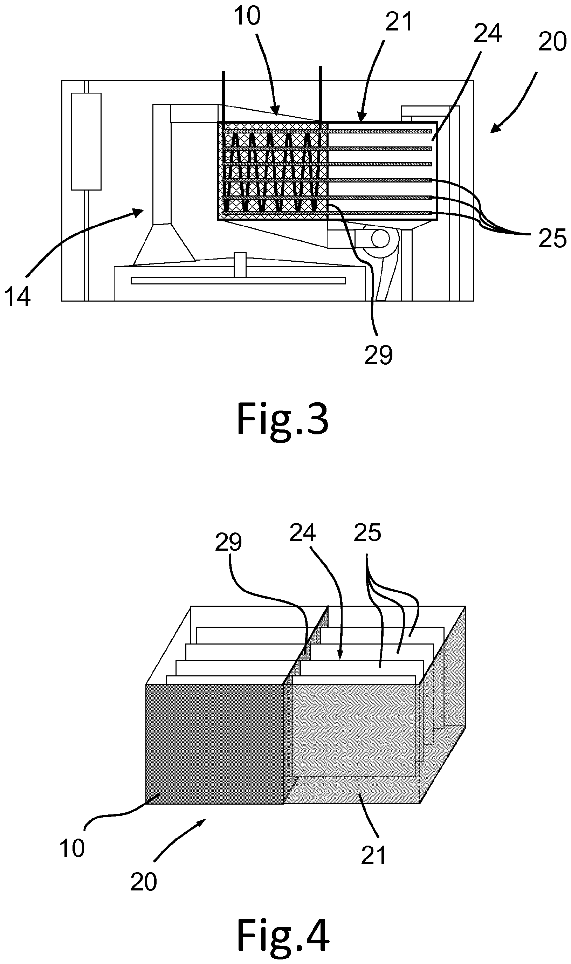

Fig. 3 lässt eine bevorzugte Ausführungsform der erfindungsgemäßen Wärmeübertragungseinrichtung 20 erkennen. Danach sind die Sorptionseinheit 10 und der Wärmespeicher 21 einander direkt nebengeordnet, wobei zur Trennung von Sorptionseinheit 10 einerseits und Wärmespeicher 21 andererseits eine Trennwand 29 vorgesehen ist. Bevorzugter Weise sind die Sorptionseinheit 10 und der Wärmespeicher 21 in einem gemeinsamen Gehäuse untergebracht.

Wie die perspektivische Darstellung nach Fig. 4 erkennen lässt, sind die Supertubes 25 des Wärmeübertragers 24 plattenförmig ausgebildet. Es wird so ein optimierter Wärmeübergang von der Sorptionseinheit 10 auf den Wärmespeicher 21 erreicht.

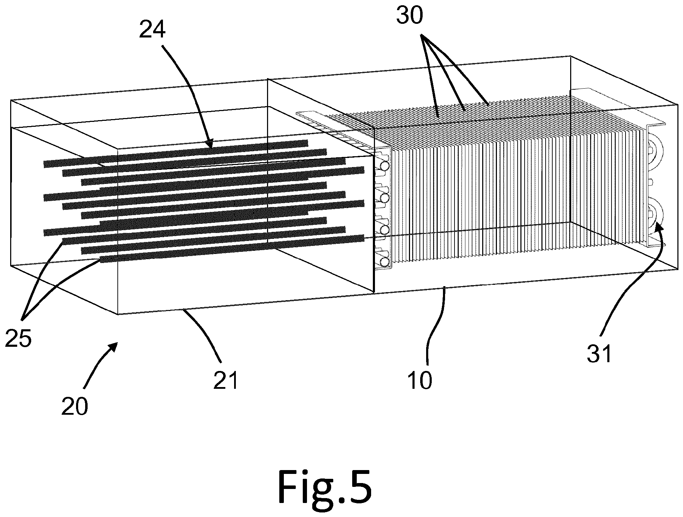

Eine alternative Ausgestaltung ist in Fig. 5 gezeigt. Im Unterschied zur vorerläuterten Konstruktion nach Fig. 4 zeigt die Ausgestaltung nach Fig. 5 rohrförmig ausgebildete Supertubes 25. Für einen optimierten Wärmeübergang vom Sorptionsmittel 12 auf die Supertubes 25 tragen diese sorptionseinheitenseitig Lamellen 30. Dabei ist es besonders bevorzugt, als Lamellen 30 die Lamellen eines ohnehin von der Sorptionseinheit 10 bereitgestellten Wärmetauschers 31 zu nutzen. Dieser Wärmetauscher 31 dient der Hindurchführung von zum Ende eines Trocknungsvorgangs durch die Sorptionseinheit 10 hindurchgeführter Luft, die dann nicht mehr direkt, d.h. in direktem Kontakt mit dem Sorptionsmittel 12 durch die Sorptionseinheit 10, sondern unter Zwischenschaltung des Wärmetauschers 31 durch die Sorptionseinheit 10 geführt wird. Dabei erfolgt die Hindurchführung der Luft durch den Wärmetauscher 31 zum Ende eines Trocknungsvorgangs deshalb, weil dann der Luft mittels der Sorptionseinheit 10 bereits so viel Feuchtigkeit entzogen worden ist, dass ein weiterer direkter Kontakt der Luft mit dem Sorptionsmittel zu keinem weiteren Feuchtigkeitsentzug führen würde. In dem Ausführungsbeispiel der Fig. 5 weist der Wärmetauscher 31 für die beschriebene Durchführung der Luft durch die Sorptionseinheit senkrecht zu den Lamellen 30 verlaufende, die Lamellen jeweils durchragende Rohrabschnitte auf, von denen in der Fig. 5 aus Darstellungsgründen lediglich links- und rechtsseitig der Lamellenanordnung befindlichen Endabschnitte zu erkennen sind.

Die erfindungsgemäße Ausgestaltung erweist sich insbesondere deshalb als vorteilhaft, weil die mit Beendigung eines Regenerationsvorganges im Sorptionsmittel 12 noch befindliche Restwärme genutzt und wiederverwendet werden kann. Mittels der erfindungsgemäßen Wärmeübertragungseinrichtung wird die im Sorptionsmittel 12 gespeicherte Restwärme auf das im Wärmespeicher bevorratete Wasser übertragen, so dass es zu einer Erwärmung des Wassers kommt, welches dann im weiteren einem vom Spülautomaten 1 durchgeführten Spülprozess zugeleitet werden kann.

### Bezugszeichen

- 1: Spülautomat
- 2: Spülbehälter
- 3: Sprüheinrichtung
- 4: Sprüharm
- 5: Sprüharm
- 6: Sammeltopf
- 7: Umwälzpumpe
- 8: Zuleitung
- 9: Trocknungseinrichtung
- 10: Sorptionseinheit
- 11: Behälter
- 12: Sorptionsmittel
- 13: elektrische Heizung
- 14: Luftführungskanal
- 15: Zuluftkanal
- 16: Abluftkanal
- 17: Gebläse
- 18: Ventil
- 19: Ventil
- 20: Wärmeübertragungseinrichtung
- 21: Wärmespeicher
- 22: Wasserzulaufleitung
- 23: Wasserablaufleitung
- 24: Wärmeübertrager
- 25: Supertube
- 26: Boiler
- 27: Boilerzulauf
- 28: Boilerablauf
- 29: Trennwand
- 30: Lamelle
- 31: Wärmetauscher
- 32: Luftströmung
- 33: Spülraum

## Patentansprüche

1. Spülautomat, insbesondere Spül- und Desinfektionsautomat für gewerbliche Zwecke, mit einem einen Spülraum (33) bereitstellenden Spülbehälter (2) und einer Trocknungseinrichtung (9) zur Trocknung von im Spülraum (33) befindlichem Spülgut, wobei die Trocknungseinrichtung (9) eine Sorptionseinheit (10) mit einem mit reversibel dehydrierbarem Sorptionsmittel (12) befüllten Behälter (11) aufweist, und mit einem Luftführungskanal (14), mittels dem die Sorptionseinheit (10) und der Spülraum (33) strömungstechnisch miteinander verbunden sind,sowie mit einer Wärmerückgewinnungseinrichtung (20), die einen mit Wasser befüllten Wärmespeicher (21) sowie einen Wärmeübertrager (24) aufweist, wobei der Wärmeübertrager (24) einerseits mit dem Sorptionsmittel (12) der Sorptionseinheit (10) und anderseits mit dem Wasser des Wärmespeichers (21) in thermischem Kontakt steht,
**dadurch gekennzeichnet,**
**dass** der Wärmeübertrager (24) sorptionseinheitenseitig in das Sorptionsmittel (12) eingebettet ist.

2. Spülautomat nach Anspruch 1,
**dadurch gekennzeichnet,**
**dass** der Wärmeübertrager (24) sorptionsseitig Lamellen (30) trägt.

3. Spülautomat nach einem der vorhergehenden Ansprüche,
**dadurch gekennzeichnet,**
**dass** der Wärmeübertrager (24) derart ausgebildet ist, dass im Falle eines Wärmegefälles zwischen der Sorptionseinheit (10) als Wärmequelle und dem Wärmespeicher (21) als Wärmesenke Wärme von der Sorptionseinheit (10) an den Wärmespeicher (21) übertragbar ist.

4. Spülautomat nach einem der vorhergehenden Ansprüche,
**dadurch gekennzeichnet,**
**dass** der Wärmeübertrager (24) ein Medium für den Wärmetransport bereitstellt.

5. Spülautomat nach Anspruch 4,
**dadurch gekennzeichnet, dass**
der Wärmetransport mittels Schall durchführbar ist.

6. Spülautomat nach einem der vorhergehenden Ansprüche,
**dadurch gekennzeichnet,**
**dass** der Wärmespeicher (21) und der Spülraum (33) strömungstechnisch miteinander verbunden sind.

7. Verfahren zum Betrieb eines Spülautomaten (1) mit einer Sorptionsmittel (12) aufweisenden Sorptionseinheit (10) nach einem der vorhergehenden Ansprüche, bei dem nach Abschluss einer Regeneration des Sorptionsmittels (12) die im Sorptionsmittel (12) noch vorhandene Restwärme zumindest teilweise zur Erwärmung von in einem Wärmespeicher (21) befindlichem Wasser verwendet wird.

8. Verfahren nach Anspruch 7,
**dadurch gekennzeichnet,**
**dass** die Restwärme mittels eines Wärmeübertragers (24) von dem Sorptionsmittel (12) an das im Wärmespeicher (21) befindliche Wasser übertragen wird.

9. Verfahren nach Anspruch 7 oder 8,
**dadurch gekennzeichnet,**
**dass** die Restwärme mittels Schall übertragen wird.

10. Verfahren nach einem der vorhergehenden Ansprüche 7 bis 9,
**dadurch gekennzeichnet,**
**dass** das erwärmte Wasser dem Spülraum (33) zugeführt wird.

## Claims

1. Automatic rinsing machine, in particular an automatic rinsing and disinfection machine for industrial purposes, comprising a rinsing container (2) that provides a rinsing chamber (33) and comprising a drying device (9) for drying rinsed items located in the rinsing chamber (33), the drying device (9) having a sorption unit (10) comprising a container (11) filled with a sorbent (12) that can be reversibly dehydrogenated, and comprising an air-conducting channel (14) by means of which the sorption unit (10) and the rinsing chamber (33) are fluidically interconnected, and comprising a heat recovery device (20) which has a heat accumulator (21) filled with water and a heat exchanger (24), one end of the heat exchanger (24) being in thermal contact with the sorbent (12) of the sorption unit (10) and the other end being in thermal contact with the water of the heat accumulator (21), **characterised in that** the heat exchanger (24) is embedded in the sorbent (12) on the sorption unit side.

2. Automatic rinsing machine according to claim 1, **characterised in that** the heat exchanger (24) supports slats (30) on the sorption side.

3. Automatic rinsing machine according to either of the preceding claims, **characterised in that** the heat exchanger (24) is designed such that, in the event of a heat drop between the sorption unit (10) as a heat source and the heat accumulator (21) as a heat sink, heat can be transferred from the sorption unit (10) to the heat accumulator (21).

4. Automatic rinsing machine according to any of the preceding claims, **characterised in that** the heat exchanger (24) provides a medium for the heat transfer.

5. Automatic rinsing machine according to claim 4, **characterised in that** the heat can be transferred by means of sound.

6. Automatic rinsing machine according to any of the preceding claims, **characterised in that** the heat accumulator (21) and the rinsing chamber (33) are fluidically interconnected.

7. Method for operating an automatic rinsing machine (1) comprising a sorption unit (10) that has a sorbent (12) according to any of the preceding claims, wherein once the sorbent (12) has been regenerated, the residual heat still present in the sorbent (12) is used at least in part to heat water located in a heat accumulator (21).

8. Method according to claim 7, **characterised in that** the residual heat is transferred from the sorbent (12) to the water located in the heat accumulator (21) by means of a heat exchanger (24).

9. Method according to either claim 7 or claim 8, **characterised in that** the residual heat is transferred by means of sound.

10. Method according to any of the preceding claims 7 to 9, **characterised in that** the heated water is supplied to the rinsing chamber (33).

## Revendications

1. Appareil de rinçage, en particulier appareil de rinçage et de désinfection à usage commercial, muni d'un récipient de rinçage (2) présentant un compartiment de rinçage (33) et d'un dispositif de séchage (9) destiné à sécher les articles à rincer se trouvant dans le compartiment de rinçage (33), le dispositif de séchage (9) comportant une unité de sorption (10) muni d'un récipient (11) rempli d'agent de sorption (12) pouvant être déshydraté de manière réversible , et muni d'un canal de guidage d'air (14), au moyen duquel l'unité de sorption (10) et la chambre de rinçage (33) sont reliées fluidiquement l'une à l'autre, et muni d'un dispositif de récupération de chaleur (20) comportant un accumulateur de chaleur (21) rempli d'eau ainsi qu'un échangeur de chaleur (24), l'échangeur de chaleur (24) étant en contact thermique avec, d'une part, l'agent de sorption (12) de l'unité de sorption (10) et, d'autre part, l'eau de l'accumulateur de chaleur (21), **caractérisé en ce que** l'échangeur de chaleur (24) est intégré dans l'agent de sorption (12) du côté de l'unité de sorption.

2. Appareil de rinçage selon la revendication 1, **caractérisée en ce que** l'échangeur de chaleur (24) porte des lamelles (30) du côté de la sorption.

3. Appareil de rinçage selon l'une des revendications précédentes, **caractérisé en ce que** l'échangeur de chaleur (24) est conçu de sorte que, dans le cas d'un gradient thermique entre l'unité de sorption (10) en tant que source de chaleur et l'accumulateur de chaleur (21) en tant que dissipateur thermique, la chaleur de l'unité de sorption (10) peut être transférée à l'accumulateur de chaleur (21).

4. Appareil de rinçage selon l'une des revendications précédentes, **caractérisé en ce que** l'échangeur de chaleur (24) présente un moyen de transport de chaleur.

5. Appareil de rinçage selon la revendication 4, **caractérisée en ce que** le transport de chaleur peut être exécuté au moyen du son.

6. Appareil de rinçage selon l'une des revendications précédentes, **caractérisé en ce que** l'accumulateur de chaleur (21) et la chambre de lavage (33) sont reliés fluidiquement l'un à l'autre.

7. Procédé de fonctionnement d'un appareil de rinçage (1) muni d'une unité de sorption (10) comportant un agent de sorption (12) selon l'une des revendications précédentes, dans lequel, après la fin d'une régénération de l'agent de sorption (12), la chaleur résiduelle encore disponible dans l'agent de sorption (12) est utilisée au moins partiellement pour le chauffage de l'eau se trouvant dans un accumulateur de chaleur (21).

8. Procédé selon la revendication 7, **caractérisé en ce que** la chaleur résiduelle est transférée de l'agent de sorption (12) à l'eau se trouvant dans l'accumulateur de chaleur (21) au moyen d'un échangeur de chaleur (24).

9. Procédé selon la revendication 7 ou 8, **caractérisé en ce que** la chaleur résiduelle est transmise au moyen du son.

10. Procédé selon l'une des revendications précédentes 7 à 9, **caractérisé en ce que** l'eau chauffée est fournie à la chambre de lavage (33).
